# EUROPÄISCHE PATENTSCHRIFT

(11) **EP 3 217 195 B1**
(45) Veröffentlichungstag und Bekanntmachung des Hinweises auf die Patenterteilung: **26.04.2023**
(21) Anmeldenummer: 16159085.6
(22) Anmeldetag: 08.03.2016
(51) Int. Cl.: G01V 8/10, F16P 3/14, G01S 17/02

(54) **OPTISCHER SENSOR**
OPTICAL SENSOR
CAPTEUR OPTIQUE

(43) Veröffentlichungstag der Anmeldung: 13.09.2017
(73) Patentinhaber: Leuze electronic GmbH + Co KG, 73277 Owen/Teck (DE)
(72) Erfinder: Feller, Bernhard, 86316 Friedberg (DE); Brunner, Rolf, 82223 Eichenau (DE); Mohr Dr., Stefan, 80686 München (DE)
(74) Vertreter: Ruckh, Rainer Gerhard

(56) Entgegenhaltungen:
- EP-A2- 1 331 433
- EP-A2- 1 443 343
- DE-A1- 3 912 398
- DE-A1-102006 012 537
- US-A1- 2010 097 665
- US-A1- 2012 123 563

## Beschreibung

Die Erfindung betrifft einen optischen Sensor gemäß dem Oberbegriff des Anspruchs 1.

Derartige optische Sensoren werden häufig auch zur Gefahrenbereichsabsicherung an Maschinen und Anlagen eingesetzt. Ein Beispiel für derartige optische Sensoren sind scannende Distanzsensoren, das heißt Flächendistanzsensoren, mittels derer das Vorfeld einer Maschine, eines Fahrzeugs oder einer Anlage überwacht wird. Diese Flächendistanzsensoren weisen ein Distanzsensorelement auf, welches Sendelichtstrahlen zur Detektion von Objekten emittiert. Zudem weist der Flächendistanzsensor eine Ablenkeinheit auf, mittels derer die Sendelichtstrahlen innerhalb einer Fläche periodisch abgelenkt werden. Mit dem Flächendistanzsensor können dann innerhalb der erfassten Fläche Objekte geortet werden, d.h. es erfolgt eine Positionsbestimmung der Objekte.

Je nach Applikation, in welcher ein derartiger Flächendistanzsensor eingesetzt wird, müssen vorgegebene Bereiche an Fahrzeugen, Maschinen oder Anlagen überwacht werden. Entsprechend den Abmessungen eines solchen Bereichs wird in dem Flächendistanzsensor ein Schutzfeld vorgegebener Größe definiert, welches einen Ausschnitt der von Sendelichtstrahlen überstrichenen Fläche bildet. Dann wird mit dem Flächendistanzsensor erfasst, ob ein Objekt in das Schutzfeld eindringt. Sobald dieses der Fall ist, wird im Flächendistanzsensor ein Objektfeststellungssignal generiert, welches vorzugsweise zur Außerbetriebsetzung der überwachten Einheit führt, so dass insbesondere eine Gefährdung von einer in das Schutzfeld eindringenden Person ausgeschlossen wird.

Aus der DE 199 17 509 C1 ist ein Flächendistanzsensor bekannt, bei welchem mehrere Schutzfelder mit unterschiedlichen Abmessungen in einer Auswerteeinheit abgespeichert sind.

Zur Auswahl eines Schutzfeldes sind mehrere Schalter über jeweils eine Zuleitung an einen Eingang der Auswerteeinheit angeschlossen, wobei jedem Eingang ein abgespeichertes Schutzfeld zugeordnet ist. Es ist auch Stand der Technik, dass einem Schutzfeld eine Kombination von Eingängen zugeordnet ist, d.h. unterschiedlichen Kombinationen von Eingängen können unterschiedliche Schutzfelder zugeordnet sein.

Die DE 39 12 398 A1 betrifft eine Objekt-Erkennungsvorrichtung für Kraftfahrzeuge mit einem Sender-/Empfängerpaar für ein Reflexsignal, das durch ein in Fahrtrichtung liegendes Objekt gebildet ist. Bei der Vorrichtung sind ein erster Arbeits-Zustand I für klare Sicht und ein zweiter Arbeits-Zustand II für trübe Sicht vorgesehen, und zwar mit davon abhängiger Signalabgabe für den Zustand I bei einem Objekt mit einer auf das Kraftfahrzeug bezogenen Relativgeschwindigkeit, die kleiner als die Fahrzeuggeschwindigkeit ist und für den Zustand II auch bei einem Objekt, dessen Relativgeschwindigkeit gleich oder größer als die Fahrzeuggeschwindigkeit ist.

Die Umschaltung zwischen den Arbeits-Zuständen erfolgt abhängig von den Signalen eines Nebelsensors oder eines manuell betätigbaren Schalters.

Die DE 10 2006 012 537 A1 betrifft ein Lichtgitter zur Erfassung von Objekten in einem Überwachungsbereich mit einer vorgegebenen Anzahl von Sendelichtstrahlen emittierenden Sendern und Empfängern. Jeweils ein Empfänger und wenigstens ein zugeordneter Sender bilden eine Strahlachse mit einer Auswerteeinheit, in welcher an den Ausgängen der Empfänger anstehende Empfangssignale zur Generierung eines Objektfeststellungssignals ausgewertet werden. In die Auswerteeinheit ist zur Parametrierung von Strahlachsen während des Betriebs des Lichtgitters mindestens ein Steuersignal einlesbar.

Die EP 1 331 433 A2 betrifft einen Lichtvorhang mit mehreren Strahlachsen bildenden Paaren von Lichtstrahlen emittierenden Sendern und Lichtstrahlen empfangenden Empfängern. Ein Benutzer kann in einem Einlernvorgang unterschiedliche Muting-Bereiche vorgeben, in welchen bestimmte Strahlachsen stummgeschaltet sind.

Die US 2012/0123563 A1 betrifft eine Vorrichtung zur Überwachung eines Überwachungsbereichs. Die Vorrichtung umfasst mehrere Sensoren, mittels derer unterschiedliche Teilbereiche des Überwachungsbereichs überwacht werden. Die Grenzen zwischen diesen Teilbereichen können in einem Konfigurationsmodus festgelegt werden.

Die EP 1 443 343 A2 betrifft einen optischen Sensor zur Erfassung von Objekten in einem Überwachungsbereich mit wenigstens einem Sendelichtstrahlen emittierenden Sender, wenigstens einem Empfangslichtstrahlen empfangenden Empfänger und einer Auswerteeinheit zur Auswertung der am Ausgang des Empfängers anstehenden Empfangssignale. Dabei sind mehrere Sicherheitsschaltausgänge vorgesehen, über welche jeweils ein Schaltsignal zur Steuerung eines Arbeitsgerätes ausgebbar ist. Die Schaltzustände eines Schaltsignals sind jeweils in Abhängigkeit der Detektion eines Objektes innerhalb wenigstens eines Schutzfeldes als Teil des Überwachungsbereichs bestimmt.

In US 2010/0097665 A1 ist ein optischer Sensor beschrieben, der bestimmte Muster erkennen kann. Durch die Detektion dieser Muster wird die Betriebsart des optischen Sensors selbsttätig eingestellt.

Der Erfindung liegt die Aufgabe zugrunde, die Funktionalität eines optischen Sensors der eingangs genannten Art zu erweitern.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Der Grundgedanke der Erfindung besteht darin, bei dem optischen Sensor Umschaltmittel derart vorzusehen, dass mit diesen Schutzfelder mit unterschiedlichen Schutzfeldkonfigurationen ausgewählt und aktiviert werden können. Wesentlich hierbei ist, dass die einzelnen Schutzfelder mit den Schutzfeldkonfigurationen unterschiedliche Funktionalitäten aufweisen. Damit wird durch eine Aktivierung der verschiedenen Schutzfelder die Funktion des optischen Sensors geändert, wodurch eine flexible Anpassung des optischen Sensors an unterschiedliche Einsatzbereiche möglich wird.

Die unterschiedlichen Schutzfeldkonfigurationen umfassen einerseits Eigenschaften von zu detektierenden Objekten, das heißt durch eine Aktivierung von Schutzfeldern mit spezifischen Schutzfeldkonfigurationen kann das Detektionsverhalten des optischen Sensors vorgegeben werden. Die unterschiedlichen Schutzfeldkonfigurationen können weiterhin unterschiedliche Steuerungsgrößen umfassen, das heißt durch eine Auswahl von Schutzfeldern mit unterschiedlichen Schutzfeldkonfigurationen kann sowohl die interne Betriebssteuerung des optischen Sensors als auch Steuerungen externer Einheiten vorgegeben werden.

Zusätzlich zu den Schutzfeldkonfigurationen, anhand derer sich die einzelnen Schutzfelder unterscheiden, können sich die Schutzfelder natürlich auch in ihren Abmessungen unterscheiden.

Weiter ist von der Erfindung auch der Fall erfasst, dass gleichzeitig mehrere Schutzfelder aktiviert sein können.

Gemäß einer vorteilhaften Ausführungsform sind Schutzfeldkonfigurationen durch detektierbare Objektgrößen von Objekten innerhalb des Schutzfelds definiert.

Insbesondere können durch die Schutzfeldkonfigurationen unterschiedliche Mindestgrößen von Objekten, die innerhalb eines Schutzfelds zu erfassen sind, vorgegeben werden. Dies ist insbesondere bei einem optischen Sensor im Bereich der Sicherheitstechnik von Bedeutung. Je nach Sicherheitsanforderung müssen dort beispielsweise Mindestgrößen von Objekten, die einem Finger oder einem Bein entsprechen, erkannt werden.

Gemäß einer weiteren vorteilhaften Ausgestaltung sind Schutzfeldkonfigurationen durch spezifische Objektarten von Objekten innerhalb des Schutzfelds definiert.

Insbesondere sind als spezifische Objektarten Reflektoren vorgegeben.

Je nach Vorgabe eines Schutzfelds mit einer spezifischen Schutzfeldkonfiguration kann somit eine Erkennung eines spezifischen Objekts mit spezifischen Eigenschaften, die im Fall eines Reflektors von retroreflektierenden Eigenschaften gebildet sind, vorgegeben werden. Die Schutzfeldkonfigurationen können dahingehend verfeinert sein, dass für die Schutzfelder Schutzfeldkonfigurationen in Form bestimmter Objektklassifikationen, wie zum Beispiel unterschiedlicher Reflektorgrößen, vorgegeben werden.

Weiter vorteilhaft sind als spezifische Objektarten Umgebungskonturen vorgegeben.

Mit einer derartigen Konturauswertung kann ein Muting realisiert werden, das heißt eine Vorgabe von zulässigen Objekten innerhalb eines Schutzfelds, bei deren Detektion ein Objektfeststellungssignal unterdrückt wird.

Gemäß einer vorteilhaften Ausführungsform sind Schutzfeldkonfigurationen durch spezifische Anlaufverhalten des optischen Sensors oder einer mit dem optischen Sensor überwachten Anlage definiert.

Das Anlaufverhalten bezieht sich auf die Zeit nach dem Einschalten des optischen Sensors und/oder einer mit dem optischen Sensor überwachten Anlage oder auf die Zeit nach einem Objekteingriff in das aktivierte Schutzfeld.

Gemäß einer ersten Variante ist das Anlaufverhalten durch einen Selbsttest des optischen Sensors definiert.

Durch unterschiedliche Schutzfeldkonfigurationen kann beispielsweise vorgegeben werden, ob bestimmte Komponenten des optischen Sensors intern zyklisch oder innerhalb größerer Zeitintervalle geprüft werden.

Gemäß einer zweiten Variante ist das Anlaufverhalten durch die Totzeit einer Anlage definiert. Die Totzeit kann durch die Anlage selbst bedingt sein. Dabei kann die Totzeit in der Anlage hinterlegt sein. Weiterhin kann die Totzeit bei einer Anlagenkonfiguration durch einen Sicherheitstest vorgegeben sein. Alternativ kann die Totzeit durch einen eventuell notwendigen manuellen Eingriff zum Freischalten der Anlage bedingt sein.

In diesem Fall werden über die Schutzfeldkonfigurationen Parameter für externe Einheiten vorgegeben.

Gemäß einer besonders vorteilhaften Ausführungsform der Erfindung ist der optische Sensor ein Sicherheitssensor, welcher einen von der Auswerteeinheit angesteuerten fehlersicheren Ausgang aufweist, über welchen als Objektfeststellungssignal ein binäres Schaltsignal zur Ansteuerung einer von dem optischen Sensor überwachten Anlage ausgegeben wird.

In diesem Fall wird bei einer Detektion eines vorzugsweise sicherheitskritischen Objekts innerhalb des aktivierten Schutzfelds über den fehlersicheren Ausgang als Schaltsignal ein Abschaltbefehl für die Anlage ausgegeben. An Stelle des fehlersicheren Ausgangs als Schaltsignal kann auch eine sichere serielle Übertragung oder ein anderes sicheres Bussystem verwendet werden.

Besonders vorteilhaft lässt eine mit den Umschaltmitteln durchgeführte Umschaltung eines Schutzfelds das am fehlersicheren Ausgang anstehende Schaltsignal unverändert.

Diese Art der Schutzfeldumschaltung führt zu einer besonders hohen Verfügbarkeit des optischen Sensors, da durch den Vorgang der Schutzfeldumschaltung das für die Objektüberwachung relevante Schaltsignal unverändert gültig bleibt, das heißt es entsteht keine zeitliche Lücke bei der Überwachung mit dem optischen Sensor.

Eine Ausnahme besteht natürlich dann, wenn durch eine Schutzfeldumschaltung ein Eingriff eines Objekts in das aktivierte Schutzfeld auftritt. In diesem Fall ändert sich natürlich das Schaltsignal.

Besonders zweckmäßig weist der optische Sensor eine Speichereinheit auf, in welcher eine Anzahl von Schutzfeldern mit unterschiedlichen Schutzfeldkonfigurationen gespeichert ist. Zur Aktivierung eines Schutzfelds wird mittels der Umschaltmittel eines der gespeicherten Schutzfelder ausgewählt.

Dabei kann insbesondere die Speichereinheit in der Auswerteeinheit integriert sein. Die Anzahl der gespeicherten Schutzfelder gibt in diesem Fall die Umschaltmöglichkeiten vor, die mit den Umschaltmitteln durchgeführt werden. Die Anzahl der gespeicherten Schutzfelder und Schutzfeldkonfigurationen kann zweckmäßig durch einen Parametriervorgang vorgegeben und bei Bedarf geändert werden.

Erfindungsgemäß wird in den Umschaltmitteln abhängig von mit dem optischen Sensor generierten Sensorsignalen ein Umschaltbefehl generiert.

In diesem Fall generiert der optische Sensor selbst Umschaltbefehle. Dabei ist der optische Sensor auf einem Fahrzeug wie einem fahrerlosen Transportsystem angeordnet, so dass anhand von mit dem optischen Sensor generierten Sensorsignalen die Geschwindigkeit und/oder Fahrtrichtung des Fahrzeugs bestimmt werden, wobei in Abhängigkeit dieser Parameter mittels der Umschaltmittel eine selbsttätige Schutzfeldumschaltung erfolgen kann.

Die Bedieneinheit kann von einem Bedienfeld wie einem Touchpanel gebildet sein. In diesem Fall kann ein Benutzer selbst Umschaltbefehle zur Schutzfeldumschaltung generieren.

Der optische Sensor kann gemäß einer ersten Variante ein scannender Distanzsensor sein.

Dabei kann der optische Sensor einen Flächendistanzsensor bilden, bei dem der Sender und der Empfänger einen Distanzsensor bilden und stationär in einem Gehäuse des optischen Sensors angeordnet sind. Dem Distanzsensor ist eine Ablenkeinheit, beispielsweise in Form eines rotierenden Spiegels zugeordnet, über welche die Sendelichtstrahlen geführt und so periodisch innerhalb eines flächigen Erfassungsbereichs geführt sind.

Alternativ kann der scannende Distanzsensor so ausgebildet sein, dass der Sender und Empfänger, welche den Distanzsensor bilden, in einem rotierenden Messkopf angeordnet sind.

Gemäß einer zweiten Variante ist der optische Sensor ein Kamera-Sensor.

In diesem Fall ist der Empfänger von wenigstens einem Bildsensor gebildet, vorzugsweise einem zeilenförmigen oder matrixförmigen CCD- oder CMOS-Array. Als Sender sind ein oder mehrere Leuchtdioden oder Laserdioden vorgesehen. Ein derartiger Kamerasensor kann auch als Distanzmesssystem ausgebildet sein, indem für die einzelnen lichtempfindlichen Elemente beispielsweise nach einem Laufzeitverfahren die Distanz zu einem zu detektierenden Objekt bestimmt wird.

Gemäß einer dritten Variante ist der optische Sensor ein nach dem Lichttasterprinzip arbeitender Lichtvorhang.

In diesem Fall besteht der optische Sensor aus einer Mehrfachanordnung von Lichttastern mit jeweils einem Sender und einem Empfänger. Die Sender und Empfänger können in einem gemeinsamen Gehäuse oder auch in separaten Gehäusen untergebracht sein.

Die Erfindung wird im Folgenden anhand der Zeichnungen erläutert. Es zeigen:
- Figur 1:: Schematische Darstellung der optischen Komponenten eines als Flächendistanzsensor ausgebildeten optischen Sensors.
- Figur 2:: Schematische Darstellung des mit dem optischen Sensor erfassten Erfassungsbereichs und eines im Erfassungsbereich angeordneten Schutzfelds.
- Figur 3:: Erste Ausführungsform der elektronischen Komponenten des optischen Sensors gemäß Figur 1.
- Figur 4:: Zweite Ausführungsform der elektronischen Komponenten des optischen Sensors gemäß Figur 1.

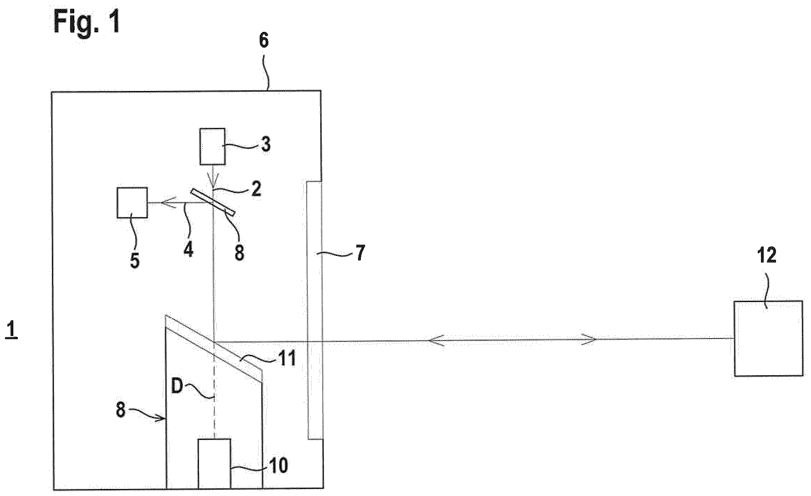

Figur 1 zeigt schematisch den Aufbau eines Ausführungsbeispiels des erfindungsgemäßen optischen Sensors 1. Der optische Sensor 1 ist im vorliegenden Fall als Flächendistanzsensor ausgebildet und umfasst einen Sendelichtstrahlen 2 emittierenden Sender 3 in Form einer Laserdiode oder dergleichen und einen Empfangslichtstrahlen 4 empfangenden Empfänger 5 in Form einer Photodiode oder dergleichen. Der Sender 3 und der Empfänger 5 sind stationär in einem Gehäuse 6 angeordnet, in dessen Frontwand ein Austrittsfenster 7 angeordnet ist. Durch einen Strahlteiler 8 wird eine koaxiale Strahlführung der Sendelichtstrahlen 2 und Empfangslichtstrahlen 4 erreicht. Der Sender 3 und der Empfänger 5 bilden einen Distanzsensor, wobei die Distanzmessung nach einem Pulslaufzeit- oder Phasenmessverfahren erfolgt. Je nach Art der Distanzmessung emittiert der Sender 3 pulsförmige oder mit einer Modulationsfrequenz modulierte Sendelichtstrahlen 2.

Die Sendelichtstrahlen 2 werden über eine Ablenkeinheit 9 in Form eines mittels eines Motors 10 um eine Drehachse drehbaren Spiegels 11 periodisch abgelenkt. Die Sendelichtstrahlen 2 werden über das Austrittsfenster 7 aus dem Gehäuse 6 geführt. Von einem Objekt 12 werden die Sendelichtstrahlen 2 als Empfangslichtstrahlen 4 zurückreflektiert und über das Austrittsfenster 7 und den Strahlteiler 8 zum Empfänger 5 geführt.

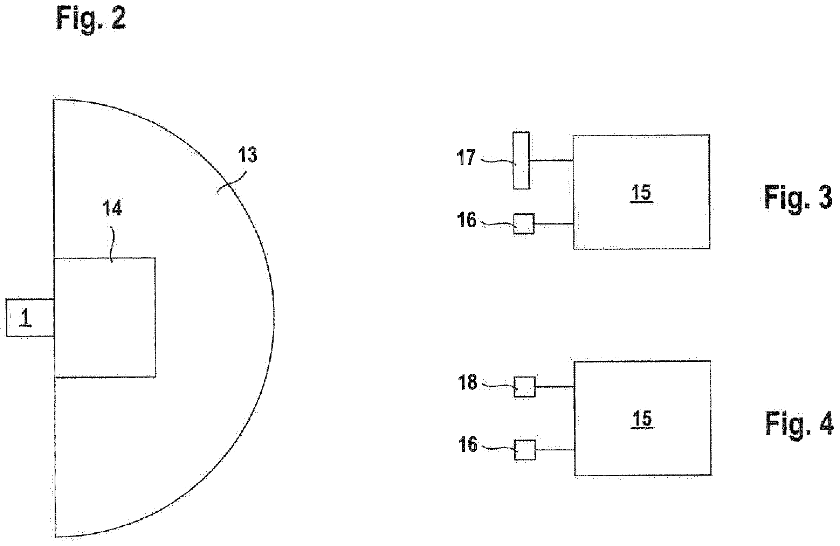

Durch die Ablenkbewegung der Ablenkeinheit 9 werden die Sendelichtstrahlen 2 in einem flächigen Erfassungsbereich 13 geführt, indem mittels des optischen Sensors 1 eine Objektdetektion erfolgen kann (Figur 2). Durch die Distanzmessung mit dem Distanzsensor und eine Winkelpositionsbestimmung mittels eines der Ablenkeinheit 9 zugeordneten Winkelgebers ist eine Positionsbestimmung von Objekten 12 im Erfassungsbereich 13 möglich. Innerhalb des Erfassungsbereichs 13 kann, wie in Figur 2 weiter dargestellt, ein Schutzfeld 14 aktiviert werden.

Figur 3 zeigt eine erste Ausführungsform der elektronischen Komponenten des optischen Sensors 1 gemäß Figur 1. Der optische Sensor 1 weist dabei eine Auswerteeinheit 15 auf, in der Empfangssignale, die im Empfänger 5 bei Objektdetektion generiert werden, ausgewertet werden. Abhängig von den Empfangssignalen wird dabei ein Objektfeststellungssignal nur dann generiert, wenn innerhalb des aktivierten Schutzfelds 14 ein Objekt 12 erfasst wird. Das Objektfeststellungssignal wird über einen Ausgang 16 ausgegeben.

Im vorliegenden Fall ist der optische Sensor 1 als Sicherheitssensor ausgebildet und weist demzufolge einen fehlersicheren Aufbau auf. Dies wird insbesondere durch einen redundanten Aufbau der Auswerteeinheit 15 erreicht. Vorzugsweise besteht die Auswerteeinheit 15 aus zwei sich gegeneinander zyklisch überwachenden Rechnereinheiten.

Der Ausgang 16 ist durch einen entsprechenden Schaltungsaufbau ebenfalls fehlersicher ausgebildet. Über diesen Ausgang 16 wird als Objektfeststellungssignal ein binäres Schaltsignal ausgegeben, mit dem eine Anlage gesteuert wird, an welcher ein Gefahrenbereich mit dem optischen Sensor 1 überwacht wird. Entsprechend des Gefahrenbereichs ist im optischen Sensor 1 ein Schutzfeld 14 aktiviert. Wird im aktivierten Zustand ein insbesondere sicherheitskritisches Objekt 12 erfasst, wird über den Ausgang 16 als Schaltsignal ein Abschaltbefehl für die Anlage ausgegeben, so dass von dieser keine Gefahr mehr ausgehen kann. Wird kein solches Objekt 12 im Schutzfeld 14 erkannt, wird über den Ausgang 16 ein Schaltsignal ausgegeben, mit dem der Betrieb der Anlage freigegeben ist.

Erfindungsgemäß weist der optische Sensor 1 Umschaltmittel auf, mittels derer eine Schutzfeldumschaltung durchgeführt werden kann. Mit den Umschaltmitteln können demzufolge unterschiedliche Schutzfelder 14 aktiviert werden, innerhalb derer der optische Sensor 1 eine Objektdetektion zur Generierung des Objektfeststellungssignals, insbesondere des Schaltsignals durchführt.

Vorteilhaft sind als parametrierbare Größen in der Auswerteeinheit 15 mehrere unterschiedliche Schutzfelder 14 abgespeichert, wobei mit den Umschaltmitteln eines dieser Schutzfelder 14 ausgewählt und aktiviert werden kann, wobei im aktivierten Schutzfeld 14 dann die Objektdetektion erfolgt.

Die einzelnen Schutzfelder 14 unterscheiden sich durch spezifische Schutzfeldkonfigurationen. Die Schutzfeldkonfigurationen können einerseits durch bestimmte detektierbare Objektgrößen, die innerhalb des Schutzfelds 14 zu erfassen sind, definiert sein. Beispielsweise kann als Schutzfeldkonfiguration für ein Schutzfeld 14 eine minimale Objektgröße vorgegeben werden, so dass dann im Betrieb des optischen Sensors 1 innerhalb dieses Schutzfelds 14 nur Objekte 12 erkannt werden, deren Größe größer oder gleich der minimalen Objektgröße ist.

Die Schutzfeldkonfiguration eines Schutzfelds 14 kann auch durch spezifische zu erfassende Objekte 12 definiert sein. Beispielsweise kann als Objektart für ein Schutzfeld 14 ein Reflektor vorgegeben sein. Weitere Beispiele für Objektarten sind Umgebungs- oder Objektkonturen, die für ein Muting des optischen Sensors 1 genutzt werden können.

Schließlich können Schutzfeldkonfigurationen durch bestimmte Steuerungsgrößen definiert sein. Beispiele hierfür sind das Anlaufverhalten des optischen Sensors 1 oder der überwachten Anlage. Im ersten Fall kann das Anlaufverhalten durch die Art des Selbsttests des optischen Sensors 1 bestimmt sein. Im zweiten Fall kann das Anlaufverhalten durch die Totzeit der Anlage bestimmt sein.

Die einzelnen Schutzfelder 14 können sich nicht nur hinsichtlich dieser Schutzfeldkonfiguration unterscheiden. Vielmehr können sich die Schutzfelder 14 auch hinsichtlich ihrer Abmessungen unterscheiden.

Wesentliche Elemente der Umschaltmittel sind in der Auswerteeinheit 15 implementiert. So kann in der Auswerteeinheit 15 eine Speichereinheit integriert sein, in der die unterschiedlichen Schutzfelder 14 abgespeichert sind. Weiterhin erfolgt mit der Auswerteeinheit 15 die Aktivierung eines dieser Schutzfelder 14, um dann innerhalb dieses Schutzfelds 14 die Objektdetektion durchzuführen.

Schließlich kann auch der Umschaltbefehl, mit dem ein Schutzfeld 14 aus der Anzahl der gespeicherten Schutzfelder 14 ausgewählt wird, intern in der Auswerteeinheit 15, vorzugsweise abhängig von den Sensorsignalen des optischen Sensors 1 generiert werden.

Alternativ wird ein extern generierter Umschaltbefehl zur Auswahl eines Schutzfelds 14 verwendet. Figur 3 zeigt ein erstes Beispiel hierfür. Dort ist eine Bedieneinheit 17 wie zum Beispiel ein Touchpanel vorgesehen. Über diese Bedieneinheit 17 kann ein Benutzer einen Umschaltbefehl zur Auswahl und Aktivierung eines Schutzfelds eingeben.

Bei der Anordnung gemäß Figur 4 ist anstelle der Bedieneinheit 17 ein Eingang 18 an die Auswerteeinheit 15 angeschlossen. In diesem Fall wird ein Umschaltbefehl in einer externen Einheit generiert und dann über den Eingang 18 in die Auswerteeinheit 15 eingelesen.

Die Schutzfeldumschaltung lässt vorzugsweise das Schaltsignal des optischen Sensors 1 unverändert, es sei denn, dass sich durch den Wechsel des Schutzfelds 14 der Schaltzustand des Schaltsignals ändern würde.

### Bezugszeichenliste

- (1): Optischer Sensor
- (2): Sendelichtstrahlen
- (3): Sender
- (4): Empfangslichtstrahlen
- (5): Empfänger
- (6): Gehäuse
- (7): Austrittsfenster
- (8): Strahlteiler
- (9): Ablenkeinheit
- (10): Motor
- (11): Spiegel
- (12): Objekt
- (13): Erfassungsbereich
- (14): Schutzfeld
- (15): Auswerteeinheit
- (16): Ausgang
- (17): Bedienereinheit
- (18): Eingang

## Patentansprüche

1. Optischer Sensor (1) zur Erfassung von Objekten (12) in einem Erfassungsbereich (13), mit wenigstens einem Sendelichtstrahlen (2) emittierenden Sender (3), wenigstes einem Empfangslichtstrahlen (4) empfangenden Empfänger (5) und einer Auswerteeinheit (15) zur Auswertung von im Empfänger (5) generierten Empfangssignalen, wobei in der Auswerteeinheit (15) ein Objektfeststellungssignal generiert wird, wenn innerhalb eines aktivierten Schutzfelds (14) ein Objekt (12) erfasst wird, wobei Umschaltmittel vorgesehen sind, mittels derer ein Schutzfeld (14) aus einer Anzahl von Schutzfeldern (14) mit unterschiedlichen Schutzfeldkonfigurationen und Abmessungen aktivierbar ist, wobei unterschiedliche Schutzfeldkonfigurationen durch unterschiedliche Eigenschaften von zu detektierenden Objekten (12) und/oder von unterschiedlichen Steuerungsgrößen definiert sind, so dass durch eine Aktivierung unterschiedlicher Schutzfelder die Funktion des optischen Sensors (1) geändert wird, und dass der optische Sensor auf einem Fahrzeug angeordnet ist, **dadurch gekennzeichnet, dass** anhand von mit dem optischen Sensor generierten Sensorsignalen die Geschwindigkeit und/oder Fahrtrichtung des Fahrzeugs bestimmt wird, wobei in Abhängigkeit der Geschwindigkeit und/oder Fahrtrichtung des Fahrzeugs mittels der Umschaltmittel eine selbsttätige Schutzfeldumschaltung erfolgt.

2. Optischer Sensor (1) nach Anspruch 1, **dadurch gekennzeichnet, dass** Schutzfeldkonfigurationen durch detektierbare Objektgrößen von Objekten (12) innerhalb des Schutzfelds (14) definiert sind.

3. Optischer Sensor (1) nach einem der Ansprüche 1 oder 2, **dadurch gekennzeichnet, dass** Schutzfeldkonfigurationen durch spezifische Objektarten von Objekten (12) innerhalb des Schutzfelds (14) definiert sind.

4. Optischer Sensor (1) nach Anspruch 3, **dadurch gekennzeichnet, dass** als spezifische Objektarten Reflektoren vorgegeben sind.

5. Optischer Sensor (1) nach einem der Ansprüche 3 oder 4, **dadurch gekennzeichnet, dass** als spezifische Objektarten Umgebungskonturen vorgegeben sind.

6. Optischer Sensor (1) nach Anspruch 5, **dadurch gekennzeichnet, dass**
durch eine Auswertung von Umgebungskonturen ein Muting realisiert ist.

7. Optischer Sensor (1) nach einem der Ansprüche 1 bis 6, **dadurch gekennzeichnet, dass** Schutzfeldkonfigurationen durch spezifische Anlaufverhalten des optischen Sensors (1) oder einer mit dem optischen Sensor (1) überwachten Anlage definiert sind.

8. Optischer Sensor (1) nach Anspruch 7, **dadurch gekennzeichnet, dass** das Anlaufverhalten durch einen Selbsttest des optischen Sensors (1) definiert ist.

9. Optischer Sensor (1) nach einem der Ansprüche 7 oder 8, **dadurch gekennzeichnet, dass** das Anlaufverhalten durch die Totzeit einer Anlage definiert ist.

10. Optischer Sensor (1) nach einem der Ansprüche 1 bis 9, **dadurch gekennzeichnet, dass** dieser ein Sicherheitssensor ist, welcher einen von der Auswerteeinheit (15) angesteuerten fehlersicheren Ausgang (16) aufweist, über welchen als Objektfeststellungssignal ein binäres Schaltsignal zur Ansteuerung einer von dem optischen Sensor (1) überwachten Anlage ausgegeben wird.

11. Optischer Sensor (1) nach Anspruch 10, **dadurch gekennzeichnet, dass** bei einer Detektion eines vorzugsweise sicherheitskritischen Objekts (12) innerhalb des aktivierten Schutzfelds (14) über den fehlersicheren Ausgang (16) als Schaltsignal ein Abschaltbefehl für die Anlage ausgegeben wird.

12. Optischer Sensor (1) nach Anspruch 10, **dadurch gekennzeichnet, dass** zur Ausgabe des Schaltsignals eine serielle Schnittstelle oder ein fehlersicheres Bussystem vorgesehen ist.

13. Optischer Sensor (1) nach einem der Ansprüche 9 bis 12, **dadurch gekennzeichnet, dass** eine mit den Umschaltmitteln durchgeführte Umschaltung eines Schutzfelds (14) das am fehlersicheren Ausgang (16) anstehende Schaltsignal unverändert lässt.

14. Optischer Sensor (1) nach einem der Ansprüche 1 bis 13, **dadurch gekennzeichnet, dass** dieser eine Speichereinheit aufweist, in welcher eine Anzahl von Schutzfeldern (14) mit unterschiedlichen Schutzfeldkonfigurationen gespeichert ist, und dass zur Aktivierung eines Schutzfelds (14) mittels der Umschaltmittel eines der gespeicherten Schutzfelder (14) ausgewählt wird.

15. Optischer Sensor (1) nach einem der Ansprüche 1 bis 14, **dadurch gekennzeichnet, dass** dieser ein scannender Distanzsensor ist.

16. Optischer Sensor (1) nach einem der Ansprüche 1 bis 15, **dadurch gekennzeichnet, dass** dieser ein Kamera-Sensor ist.

17. Optischer Sensor (1) nach einem der Ansprüche 1 bis 16, **dadurch gekennzeichnet, dass** dieser ein nach dem Lichttasterprinzip arbeitender Lichtvorhang ist.

## Claims

1. An optical sensor (1) for detecting objects (12) in a detection area (13), having at least one transmitter (3) emitting transmitted light beams (2), at least one receiver (5) receiving received light beams (4) and an evaluation unit (15) for evaluating received signals generated in the receiver (5), an object detection signal being generated in the evaluation unit (15) if an object (12) is detected within an activated protective field (14),
wherein switching means are provided by means of which a protective field (14) can be activated from a number of protective fields (14) with different protective field configurations and dimensions, wherein different protective field configurations are defined by different properties of objects (12) to be detected and/or by different control variables, so that the function of the optical sensor (1) is changed by an activation of different protective fields, and in that the optical sensor is arranged on a vehicle,
**characterised in that** the speed and/or direction of travel of the vehicle is determined on the basis of sensor signals generated with the optical sensor, automatic protective field switching being effected by means of the switching means as a function of the speed and/or direction of travel of the vehicle.

2. An optical sensor (1) according to claim 1, **characterised in that** protective field configurations are defined by detectable object sizes of objects (12) within the protective field (14).

3. An optical sensor (1) according to one of claims 1 or 2, **characterised in that** protective field configurations are defined by specific object types of objects (12) within the protective field (14).

4. An optical sensor (1) according to claim 3, **characterised in that** reflectors are predetermined as specific object types.

5. An optical sensor (1) according to one of claims 3 or 4, **characterised in that** ambient contours are predefined as specific object types.

6. An optical sensor (1) according to claim 5, **characterised in that** muting is realised by an evaluation of environmental contours.

7. An optical sensor (1) according to one of the claims 1 to 6, **characterised in that** protective field configurations are defined by specific start-up behaviour of the optical sensor (1) or of a system monitored with the optical sensor (1).

8. An optical sensor (1) according to claim 7, **characterised in that** the start-up behaviour is defined by a self-test of the optical sensor (1).

9. An optical sensor (1) according to one of claims 7 or 8, **characterised in that** the start-up behaviour is defined by the dead time of a system.

10. An optical sensor (1) according to one of the claims 1 to 9, **characterised in that** this is a safety sensor which has a fail-safe output (16) which is controlled by the evaluation unit (15) and via which a binary switching signal is output as an object detection signal for controlling an installation monitored by the optical sensor (1).

11. An optical sensor (1) according to claim 10, **characterised in that** upon detection of a preferably safety-critical object (12) within the activated protective field (14), a switch-off command for the system is output as a switching signal via the fail-safe output (16).

12. An optical sensor (1) according to claim 10, **characterised in that** a serial interface or a fail-safe bus system is provided for outputting the switching signal.

13. An optical sensor (1) according to one of claims 9 to 12, **characterised in that** a switching of a protective field (14) carried out by the switching means leaves the switching signal present at the fail-safe output (16) unchanged.

14. An optical sensor (1) according to one of claims 1 to 13, **characterised in that** it has a memory unit in which a number of protective fields (14) with different protective field configurations are stored, and **in that**, in order to activate a protective field (14), one of the stored protective fields (14) is selected by means of the switching means.

15. An optical sensor (1) according to one of claims 1 to 14, **characterised in that** it is a scanning distance sensor.

16. An optical sensor (1) according to any one of claims 1 to 15, **characterised in that** it is a camera sensor.

17. An optical sensor (1) according to one of claims 1 to 16, **characterised in that** it is a light curtain operating according to the light sensor principle.

## Revendications

1. Capteur optique (1) pour la détection d'objets (12) dans une zone de détection (13), comportant au moins un émetteur (3) émettant des faisceaux lumineux (2), au moins un récepteur (5) recevant des faisceaux lumineux (4) reçus et une unité d'évaluation (15) pour l'évaluation de signaux de réception générés dans le récepteur (5), un signal de détection d'objet étant généré dans l'unité d'évaluation (15) lorsqu'un objet (12) est détecté à l'intérieur d'un champ de protection (14) activé,
des moyens de commutation étant prévus, au moyen desquels un champ de protection (14) peut être activé à partir de plusieurs champs de protection (14) présentant des configurations de champ de protection et des dimensions différentes, des configurations de champ de protection différentes étant définies par des propriétés différentes des objets (12) à détecter et/ou par des grandeurs de commande différentes, de sorte que la fonction du capteur optique (1) est modifiée par une activation de champs de protection différents, et en ce que le capteur optique est disposé sur un véhicule,
**caractérisé en ce que** la vitesse et/ou le sens de marche du véhicule sont déterminés sur la base de signaux de capteur générés par le capteur optique, une commutation automatique des champs de protection étant effectuée au moyen des moyens de commutation en fonction de la vitesse et/ou du sens de marche du véhicule.

2. Capteur optique (1) selon la revendication 1, **caractérisé en ce que** les configurations du champ de protection sont définies par les tailles détectables des objets (12) à l'intérieur du champ de protection (14).

3. Capteur optique (1) selon l'une des revendications 1 ou 2, **caractérisé en ce que** les configurations du champ de protection sont définies par des types d'objets spécifiques d'objets (12) à l'intérieur du champ de protection (14).

4. Capteur optique (1) selon la revendication 3, **caractérisé en ce que** les réflecteurs sont prédéterminés en tant que types d'objets spécifiques.

5. Capteur optique (1) selon l'une des revendications 3 ou 4, **caractérisé en ce que** les contours ambiants sont prédéfinis comme des types d'objets spécifiques.

6. Capteur optique (1) selon la revendication 5, **caractérisé en ce que** le muting est réalisé par une évaluation des contours ambiants.

7. Capteur optique (1) selon l'une des revendications 1 à 6, **caractérisé en ce que** les configurations du champ de protection sont définies par un comportement de démarrage spécifique du capteur optique (1) ou d'un système surveillé avec le capteur optique (1).

8. Capteur optique (1) selon la revendication 7, **caractérisé en ce que** le comportement au démarrage est défini par un auto-test du capteur optique (1).

9. Capteur optique (1) selon l'une des revendications 7 ou 8, **caractérisé en ce que** le comportement au démarrage est défini par le temps mort d'un système.

10. Capteur optique (1) selon l'une des revendications 1 à 9, **caractérisé en ce qu'**il s'agit d'un capteur de sécurité qui présente une sortie de sécurité (16) commandée par l'unité d'évaluation (15) et par laquelle un signal de commutation binaire est émis comme signal de détection d'objet pour la commande d'une installation surveillée par le capteur optique (1).

11. Capteur optique (1) selon la revendication 10, **caractérisé en ce que**, lors de la détection d'un objet (12), de préférence critique pour la sécurité, à l'intérieur du champ de protection (14) activé, un ordre d'arrêt de l'installation est émis sous forme de signal de commutation par la sortie de sécurité (16).

12. Capteur optique (1) selon la revendication 10, **caractérisé en ce qu'**une interface série ou un système de bus à sécurité intégrée est prévu pour délivrer le signal de commutation.

13. Capteur optique (1) selon l'une des revendications 9 à 12, **caractérisé en ce qu'**une commutation d'un champ de protection (14) effectuée par les moyens de commutation laisse inchangé le signal de commutation présent sur la sortie de sécurité (16).

14. Capteur optique (1) selon l'une des revendications 1 à 13, **caractérisé en ce qu'**il comporte une unité de mémoire dans laquelle sont stockés un certain nombre de champs de protection (14) avec différentes configurations de champ de protection, et **en ce que**, pour activer un champ de protection (14), l'un des champs de protection (14) stockés est sélectionné au moyen des moyens de commutation.

15. Capteur optique (1) selon l'une des revendications 1 à 14, **caractérisé en ce qu'**il est un capteur de distance à balayage.

16. Capteur optique (1) selon l'une des revendications 1 à 15, **caractérisé en ce qu'**il est un capteur de caméra.

17. Capteur optique (1) selon l'une des revendications 1 à 16, **caractérisé en ce qu'**il est un rideau lumineux fonctionnant selon le principe du capteur de lumière.
